# EUROPÄISCHE PATENTSCHRIFT

(11) **EP 2 765 066 B1**
(45) Veröffentlichungstag und Bekanntmachung des Hinweises auf die Patenterteilung: **04.12.2019**
(21) Anmeldenummer: 14151389.5
(22) Anmeldetag: 16.01.2014
(51) Int. Cl.: B62D 53/08

(54) **Sattelkupplung**
Fifth wheel
Sellette d'attelage

(30) Priorität: 12.02.2013 DE 102013202218
(43) Veröffentlichungstag der Anmeldung: 13.08.2014
(73) Patentinhaber: SAF-HOLLAND GmbH, 63856 Bessenbach (DE)
(72) Erfinder: Riesterer, Michael, 78247 Hilzingen (DE)
(74) Vertreter: Müller Schupfner & Partner Patent- und Rechtsanwaltspartnerschaft mbB

(56) Entgegenhaltungen:
- EP-A1- 2 409 901
- DE-A1-102007 054 613
- DE-A1-102009 032 905
- US-A- 2 196 537
- US-A- 2 468 013
- US-A- 5 765 849
- US-A1- 2012 280 472
- 31647_jsk37 Fly_d_060721: "Sattelkupplung JST 37 CW - Technische Daten", , 1 January 2006 (2006-01-01), pages 10-1, XP055468480, Retrieved from the Internet: URL:https://www.jostinformationcentre.com/ static/upload/pdf/trucks/31647_JSK37_CW_Fl y_d_060724.pdf [retrieved on 2018-04-18]

## Beschreibung

Die vorliegende Erfindung betrifft Fahrzeugsystem und eine Sattelkupplung.

Sattelkupplungen sind aus dem Stand der Technik seit langem bekannt und zur Verbindung eines mit einem Zugsattelzapfen ausgestatteten Anhängers bzw. Sattelaufliegers und der Zugmaschine eines Lastzuges geeignet. Es hat sich dabei eine Auslegung der Sattelkupplungen etabliert, bei welcher diese schwenkbar um eine Querachse des Nutzfahrzeuges bzw. der Zugmaschine ist, um Kipp- bzw. Nickbewegungen der Zugmaschine relativ zum Sattelauflieger ausgleichen zu können. Insbesondere bei Durchfahren einer Talsohle oder Überfahren einer Bergkuppe muss die Sattelkupplung in der Lage sein, eine Schwenkbewegung des Sattelaufliegers und der Zugmaschine relativ zueinander auszugleichen. Als problematisch hat sich jedoch rausgestellt, dass, wenn kein Sattelauflieger an der Sattelkupplung befestigt ist und diese frei schwingen kann, Beschädigungen am Rahmen sowie an weiteren Komponenten des Fahrwerks der Zugmaschine auftreten können, wenn die Sattelkupplung ungehindert mit großen Winkeln frei schwenkbar ist. Darüber hinaus kann während des Einkuppelns, insbesondere bei Auftreten von Fehlkupplungsmanöver, die Sattelkupplung derart verschwenkt werden, dass sie in empfindliche Bereiche des Rahmens der Zugmaschine eintaucht und Schaden anrichtet. Dies Phänomen wird außerdem dadurch verstärkt, dass es aus Gründen der Bauraum- und Gewichtsreduzierung bevorzugt ist, die Sattelkupplung möglichst kompakt auszuführen.

Die US 2,468,013 A betrifft eine Sattelkupplung zum Einsatz in einem Nutzfahrzeuganhänger, wobei im Bereich der schwenkbaren Lagerung der Kupplungsplatte an einem Lagerbock ein Federelement vorgesehen ist, welches eine verbesserte Schwenkbewegung der Kupplungsplatte erlaubt.

Die US 2012/0280472 A1 betrifft eine Kupplungsplatte, die über eine Adaptereinheit an verschiedenen Positionen eines Rahmens eines Nutzfahrzeuges festlegbar ist. Dabei ist eine Vielzahl von Schraubenelementen vorgesehen, um eine ausreichend feste und flexibel einstellbare Befestigungsposition erreichen zu können.

Aufgabe der vorliegenden Erfindung ist es angesichts dieser Problematik, eine Sattelkupplung bereitzustellen, welche bei ihrer Schwenkbewegung nicht in empfindliche Bereiche des Rahmens eines Nutzfahrzeuges eindringt und gleichzeitig eine kompakte und leichte Bauweise gewährleistet.

Diese Aufgabe wird gelöst mit einer Sattelkupplung gemäß dem unabhängigen Anspruch 1. Weitere Vorteile und Merkmale der Erfindung ergeben sich aus den abhängigen Ansprüchen.

Erfindungsgemäß umfasst die Sattelkupplung eine Lagerbockeinheit und eine Kupplungseinheit, wobei die Lagerbockeinheit einen Befestigungsbereich zur Festlegung an einem Rahmen des Nutzfahrzeuges und einen Lagerbereich aufweist, wobei die Kupplungseinheit um eine Schwenkachse schwenkbar zur Lagerbockeinheit am Lagerbereich der Lagerbockeinheit festlegbar ist, wobei die Lagerbockeinheit und/oder die Kupplungseinheit einen ersten Anschlag aufweist, welcher die Schwenkbewegung der Kupplungseinheit relativ zur Lagerbockeinheit derart begrenzt, dass eine Berührung zwischen Kupplungseinheit und dem Rahmen verhindert ist. Die Lagerbockeinheit ist bevorzugt ein Bauteil, welches die Kupplungseinheit gegen transversale Verlagerung relativ zum Rahmen des Nutzfahrzeuges sichert. Hierfür weist die Lagerbockeinheit einen Befestigungsbereich auf, welcher am Rahmen des Nutzfahrzeuges festlegbar oder bevorzugt festgelegt ist, und einen Lagerbereich, welcher insbesondere der schwenkbaren, dabei aber gegen Transversalverlagerungen gesicherten Lagerung der Kupplungseinheit dient. Der Befestigungsbereich der Lagerbockeinheit ist bevorzugt plattenförmig ausgebildet und weist insbesondere bevorzugte Bohrungen auf, in welchen Schrauben oder Bolzen zur Festlegung der Lagerbockeinheit am Rahmen des Nutzfahrzeuges eingeführt werden können. Als Rahmen des Nutzfahrzeuges wird in diesem Zusammenhang nicht nur die tragende Struktur des Nutzfahrzeuges bezeichnet, sondern auch sämtliche der an dieser tragenden Struktur angebrachten Systeme, die von der Kupplungsplatte bei ihrer Schwenkbewegung berührt oder beschädigt werden könnten. Der Rahmen des Nutzfahrzeuges definiert im Sinne der vorliegenden Erfindung und dabei bevorzugt einen Bereich, welcher nicht durch die Kupplungseinheit berührt bzw. geschnitten werden darf. Bevorzugt umfasst der Rahmen des Nutzfahrzeuges den tatsächlich aus Metallkörpern bzw. -trägem gebildeten tragenden Rahmen sowie das Achssystem, die Bremssysteme und weitere Systeme, wie Hydraulik- oder Pneumatikeinrichtungen. Zur Begrenzung der Schwenkbewegung der Kupplungseinheit relativ zur Lagerbockeinheit weist die Lagerbockeinheit und/oder die Kupplungseinheit einen ersten Anschlag auf, an welchem die jeweils andere Einheit, Kupplungseinheit oder Lagerbockeinheit, bei Erreichen einer bestimmten Schwenkposition der Kupplungseinheit anschlägt. Eine bevorzugte Anordnung des ersten Anschlages an der Lagerbockeinheit schafft die Möglichkeit einer kompakten Bauweise der Sattelkupplung und gewährleistet zum anderen die Aufnahme von Kräften bzw. Momenten, welche von der Kupplungseinheit auf die Lagerbockeinheit einwirken. Vorzugsweise weist die Kupplungseinheit eine aus dem Stand der Technik bekannte Sattelkupplungsplatte auf, bei welcher ein Zugsattelzapfen eines Sattelaufliegers, auch Königszapfen genannt, in eine v-förmige Geometrie einführbar ist und schließlich in einem Aufnahmebereich der Kupplungseinheit schwenkbar festlegbar ist. Für den Fall, dass ein Einkuppelvorgang, d. h. der Vorgang, bei welchem versucht wird, den Königszapfen in den Aufnahmebereich der Kupplungseinheit zu bringen, fehlschlägt, können unter Umständen auf eines der distalen Enden der Kupplungseinheit in vertikaler Richtung wirkenden Kräfte vom Sattelauflieger auf die Kupplungseinheit übertragen werden, welche wiederum eine Verschwenkbewegung der Kupplungseinheit um die Schwenkachse verursachen. Je nach Gewichtskraft des Sattelaufliegers können so bis zu 300 kN auf das distale Ende der Kupplungseinheit einwirken, wobei das sich daraus ergebende Drehmoment um die Schwenkachse bevorzugt durch den ersten Anschlag aufgefangen wird. Je näher dabei der erste Anschlagabschnitt an der Schwenkachse angeordnet ist desto größer ist verständlicherweise die vom ersten Anschlag aufzunehmende Kraft. Vorzugsweise ist dabei der mittlere Abstand des ersten Anschlages von der Schwenkachse ein 0,05-0,7-faches, bevorzugt ein 0,1-0,5-faches und insbesondere bevorzugt ein 0,15-0,2-faches des Abstandes eines ersten distalen Endes der Kupplungseinheit von der Schwenkachse. Je größer dieses Verhältnis ist desto kleiner ist bei einer bestimmten Erstreckung der Kupplungseinheit sowie einer bestimmten Kraft, welche auf das distale Ende der Kupplungseinheit einwirkt, die vom ersten Anschlag aufzunehmende Kraft. Gleichzeitig aber steigt der Bauraumbedarf der Lagerbockeinheit und die Konstruktion der Sattelkupplung ist in der Folge weniger kompakt und schwerer. Es hat sich gezeigt, dass insbesondere ein Verhältnis des Abstands des ersten Anschlages von der Schwenkachse zum Abstand des distalen Endes der Kupplungseinheit von der Schwenkachse von 0,15 - 0,2 einen besonders guten Kompromiss zwischen einer kompakten Bauweise, geringem Gewicht und einer gleichzeitig ausreichend hohen Aufnahmefähigkeit für Kräfte, welche durch Fehlkupplungsmanöver auf die Kupplungseinheit wirken und diese derart verschwenken, dass der erste Anschlag eine Beschädigung von Baugruppen des Rahmens des Nutzfahrzeuges verhindern muss.

Vorzugsweise ist der Lagerbereich der Lagerbockeinheit von einer durch den Rahmen definierten ersten Rahmenebene beabstandet, wobei eine durch den Lagerbereich verlaufende Schwenkachse um einen ersten Abstand von der ersten Rahmenebene beabstandet ist, wobei der erste Abstand gleich dem Produkt aus dem Sinus eines Maximalwinkels und einer ersten Entfernung eines ersten distalen Endes der Kupplungseinheit von der Schwenkachse ist. Die erste Rahmenebene ist in diesem Zusammenhang bevorzugt die Ebene, welche durch einen oder mehrere Punkte des Rahmens verläuft, an welchen die Kupplungseinheit bei Verschwenkung in eine positive Schwenkrichtung, ohne das Vorhandensein eines ersten Anschlages, den Rahmen berühren würde. Insbesondere bevorzugt verläuft die erste Rahmenebene durch die Punkte des Rahmens des Nutzfahrzeuges mit der größten Erhebung in vertikaler Richtung. Vorzugsweise verläuft die erste Rahmenebene durch zumindest einen der zuvor beschriebenen Berührungspunkte, welcher in Fahrzeuglängsrichtung gesehen, hinter der Lagerbockeinheit angeordnet ist. Der Lagerbereich der Lagerbockeinheit und insbesondere die durch diesen verlaufende Schwenkachse ist mit Vorteil um einen ersten Abstand von der Rahmenebene beabstandet, wobei der erste Abstand bevorzugt groß genug ist, um eine gewisse Mindestverschwenkbarkeit der Kupplungseinheit zu ermöglichen, ohne dass diese ohne das Vorhandensein eines ersten Anschlages am Rahmen des Nutzfahrzeuges anschlagen würde. Der Maximalwinkel αₘₐₓ ist somit bevorzugt definiert als der hypothetische maximale Winkel um welchen die Kupplungseinheit verschwenkt werden müsste, bis ein erstes distales Ende der Kupplungseinheit gerade noch nicht oder gerade am Rahmen anschlägt. Es versteht sich, dass im Sinne der vorliegenden Erfindung gerade dieses Anschlagen der Kupplungseinheit am Rahmen durch ersten Anschlag verhindert wird. Mit Vorteil ist die Kupplungseinheit bis fast zum Maximalwinkel verschwenkbar, da auf diese Weise die Verbindung zwischen Zugfahrzeug und Sattelauflieger insbesondere beim Durchfahren von Talsohlen oder Überfahren von Bergkuppen die nötige Verschwenkbarkeit aufweist. Der Maximalwinkel αₘₐₓ ist dabei ein Wert, der noch einen guten Kompromiss zwischen einer Sicherheit gegen das Anschlagen der Kupplungseinheit an dem Rahmen und einem möglichst großen Verschwenkbereich kennzeichnet.

Vorzugsweise liegt der Maximalwinkel der Kupplungseinheit, von einer Parallelen zur ersten Rahmenebene gemessen, in einem Bereich von 3°-30°, bevorzugt 4°-20° und besonders bevorzugt im Bereich von ca. 4°-12°. Bevorzugt muss die Kupplungseinheit relativ zum Rahmen bzw. relativ zur Lagerbockeinheit und zumindest 5° um die Schwenkachse verschwenkbar sein, um insbesondere in hügeligem Gelände eine Fahrt des Nutzfahrzeuges bei sich ändernden Anstiegen der Fahrbahn ohne Beschädigungen an der Sattelkupplung zu ermöglichen. Besonders bevorzugt ist dabei die mögliche Maximalverschwenkbarkeit der Kupplungseinheit relativ zum Rahmen des Nutzfahrzeuges größer als 4°.

Besonders bevorzugt schlägt die Kupplungseinheit bei positiver Verschwenkung um einen ersten Anschlagwinkel am ersten Anschlag an, wobei der erste Anschlagwinkel ein 0,3-faches, bevorzugt ein 0,5-0,95-faches und besonders bevorzugt ein ca. 0,7-0,9-faches des Maximalwinkels ist. Vorzugsweise ist der erste Anschlagwinkel kleiner als der zuvor definierte Maximalwinkel. Besonders bevorzugt besteht hierbei ein Verhältnis von 0,5-0,95 des ersten Anschlagwinkels zum Maximalwinkel. Es kann auf diese Weise ein ausreichender Sicherheitsfaktor gewährleistet werden und selbst bei Anschlagen der Kupplungseinheit an dem Anschlag und einer zusätzlich auftretenden Verbiegung der Kupplungseinheit aufgrund der einwirkenden Kräfte ein Anschlagen bzw. eine Berührung der Kupplungseinheit mit dem Rahmen der Zugmaschine verhindert werden. Um bei einer kompakten Bauweise der Sattelkupplung, d. h., bei einem bevorzugt möglichst geringen Abstand der Schwenkachse von der ersten Rahmenebene und gleichzeitig ausreichenden Verschwenkbarkeit der Kupplungseinheit einen guten Kompromiss dieser beiden Faktoren zu ermöglichen, ist der erste Anschlagwinkel, insbesondere bevorzugt ein 0,7-0,9-faches des Maximalwinkels. Als positive Verschwenkung wird in diesem Zusammenhang eine Verschwenkung bezeichnet, bei welcher sich das erste distale Ende der Kupplungseinheit an den Rahmen annähert. Auf das gesamte Nutzfahrzeug bezogen, ist das erste distale Ende der Kupplungseinheit, vorzugsweise das am Nutzfahrzeug, bzw. an der Zugmaschine nach hinten gerichtete Ende der Kupplungseinheit, wobei eine positive Verschwenkung der Kupplungseinheit insbesondere dann auftritt, wenn das Nutzfahrzeug mit seinem Anhänger über eine Bergkuppe fährt.

In einer bevorzugten Ausführungsform ist der erste Anschlag der Lagerbockeinheit als Vorsprung ausgebildet und weist eine Anschlagfläche auf, wobei die Kupplungseinheit eine Anschlagfläche aufweist, welche mit der Anschlagfläche der Lagerbockeinheit korrespondiert. Insbesondere bevorzugt ist es in diesem Zusammenhang, dass die Anschlagflächen des Anschlages der Lagerbockeinheit und der Kupplungseinheit sowohl in ihrer Größe als auch in ihrer Form als auch in ihrer Ausrichtung miteinander derart korrespondieren, dass sie bei Kontakt im Wesentlichen vollständig aufeinanderliegen bzw. sich im Wesentlichen vollständig oder flächig berühren. Auf diese Weise können insbesondere lokal auftretende Spannungsspitzen, wie beispielsweise bei einer hertzschen Flächenpressung, minimiert werden. Insbesondere bevorzugt ist es, dass der erste Anschlag als Materialverstärkung ausgeführt, bzw. mit einer solchen versehen ist, um besonders hohe Kräfte unter Kraftfluss günstiger Spannungsübertragung in die Lagerbockeinheit einzuleiten.

Besonders bevorzugt ist es, dass sich die Anschlagfläche im Wesentlichen parallel zu einer Ebene erstreckt, welche um den Anchlagwinkel relativ zur Rahmenebene verschwenkt und senkrecht zu einer um die Schwenkachse verlaufenden Kreisbahn ausgerichtet ist. Dieses geometrische Merkmal der Anschlagfläche und insbesondere ihrer Ausrichtung an der Lagerbockeinheit dient vorzugsweise der Optimierung der Kraftübertragung von der Kupplungseinheit auf die Anschlagfläche und damit auf die Lagerbockeinheit. Vorzugsweise ist die Anschlagfläche derart ausgerichtet, dass bei Anschlagen der Kupplungseinheit die auf die Anschlagfläche bzw. auf den ersten Anschlag einwirkenden Kräfte orthogonal zur Anschlagfläche stehen. Es können auf diese Weise Scherkräfte und daraus resultierende Schubspannungen und Oberflächenreibungen verhindert werden und so eine Beschädigung des Materials der Lagerbockeinheit im Bereich des ersten Anschlages verhindert werden. Zur weiteren Optimierung der Kraftübertragung ist es bevorzugt, dass der erste Anschlag mit vorzugsweise gerundeten Geometrien in die Lagerbockeinheit übergeht, wobei insbesondere Kerbwirkung an scharfen Kanten und daraus entstehende Spannungsspitzen reduziert bzw. minimiert werden.

Weiterhin bevorzugt weist die Anschlagfläche ein Material höherer Zähigkeit auf als das Herstellungsmaterial der Lagerbockeinheit, um insbesondere bevorzugt hertzscher Flächenpressung besser widerstehen zu können. Vorzugsweise ist die Anschlagfläche mit einem Material höherer Zähigkeit beschichtet, oder durch eine aufgeklebte Materialschicht verstärkt, um insbesondere die bei hertzscher Flächenpressung, d. h., lokal begrenzt auftretenden hohen Kräften bzw. Spannungen im Material auftretende Sprödbruchneigung der Anschlagfläche zu vermeiden. Es kann darüber hinaus bevorzugt sein, dass das Material höherer Zähigkeit auf der Anschlagfläche ein Verschleißteil ist, welches in periodischen Abständen auswechselbar ist.

Alternativ bevorzugt weist die Kupplungseinheit einen Anschlag auf, welcher als Vorsprung ausgebildet ist und ausgelegt ist, sich an einer Anschlagfläche der Lagerbockeinheit abzustützen. Bevorzugt kann der Anschlag der Kupplungseinheit als Nase ausgebildet sein, welche sich beispielsweise längs oder parallel zur Schwenkachse erstreckt und an eine seitliche Außenfläche der Lagerbockeinheit anschlägt.

Weiterhin bevorzugt ist es, dass die Lagerbockeinheit einen zweiten Anschlag aufweist, an welchem die Kupplungseinheit bei einer negativen Verschwenkung um einen zweiten Anschlagwinkel α_{B} anschlägt. Besonders bevorzugt ist es also, dass eine Verschwenkbewegung in einer negativen Richtung, d. h., der positiven Verschwenkung entgegengesetzt, durch einen zweiten Anschlag gegen eine Berührung des Rahmens gesichert ist. Ein negatives Verschwenken der Kupplungseinheit kann insbesondere auftreten, wenn beim Versuch eines Einkuppelvorgangs der Königszapfen derart an die Kupplungseinheit stößt, dass diese mit ihrem dem Fahrzeugende zugewandten distalen Ende nach oben und entsprechend mit ihrem zweiten, der Fahrzeugvorderseite zugewandten distalen Ende, in Richtung des Rahmens des Nutzfahrzeuges verschwenkt wird. Wie im Fall einer positiven Verschwenkung der erste Anschlag, verhindert der zweite Anschlag bei einer negativen Verschwenkung bevorzugt, dass die Kupplungseinheit in empfindliche Bereiche des Rahmens des Nutzfahrzeuges eindringt und an diesem Schaden anrichtet.

Vorzugsweise ist der zweite Anschlagwinkel ein 0,3-1-faches, bevorzugt ein 0,5-0,95-faches und besonders bevorzugt ein ca. 0,7-0,9-faches des Arkussinus des Quotienten aus einem zweiten Abstand und einer zweiten Entfernung eines zweiten distalen Endes der Kupplungseinheit von der Schwenkachse. Der zweite Abstand ist in diesem Zusammenhang der Abstand der Schwenkachse von einer zweiten Rahmenebene. Die zweite Rahmenebene ist in diesem Zusammenhang bevorzugt die Ebene, welche durch einen oder mehrere Punkte des Rahmens verläuft, an welchen die Kupplungseinheit bei Verschwenkung in eine negative Schwenkrichtung, ohne das Vorhandensein eines zweiten Anschlages, den Rahmen berühren würde. Vorzugsweise verläuft die zweite Rahmenebene durch zumindest einen Punkt, welcher in Fahrzeuglängsrichtung gesehen, vor der Lagerbockeinheit angeordnet ist. Besonders bevorzugt ist es also, dass der zweite Anschlagwinkel kleiner ist als der Winkel, bei welchem die Kupplungseinheit bei einer negativen Verschwenkung den Rahmen berühren bzw. an diesem Anschlagen würde. Wie bereits für den Fall einer positiven Verschwenkung erläutert, ist dabei bevorzugt ein ausreichender Sicherheitsfaktor vorgesehen, welcher eventuelle Verbiegung sowohl der Kupplungseinheit als auch der Lagerbockeinheit bei Einwirken großer Kräfte berücksichtigt und auch in diesem Falle verhindert, dass die Kupplungseinheit den Rahmen des Nutzfahrzeuges berührt.

Vorzugsweise sind der Lagerbereich und ein zu diesem zumindest bereichsweise korrespondierender Lagerbereich der Kupplungseinheit zumindest abschnittsweise rotationssymmetrisch um die Schwenkachse ausgebildet. Um eine Verschwenkbarkeit der Kupplungseinheit relativ zur Lagerbockeinheit zu gewährleisten, ist der Lagerbereich der Lagerbockeinheit und der korrespondierend mit diesem ausgebildete Lagerbereich der Kupplungseinheit zumindest abschnittsweise mit bevorzugt rotationssymmetrisch ausgebildeten Flächen ausgestattet. Besonders bevorzugt reiben diese Flächen als Gleitlager aufeinander, während die Kupplungseinheit eine Verschwenkbewegung relativ zur Lagerbockeinheit ausführt. Besonders bevorzugt ist hierbei ein Befestigungselement vorgesehen, welches im Lagerbereich der Lagerbockeinheit und im Lagerbereich der Kupplungseinheit eingreift, um die Kupplungseinheit gegen translatorische Bewegung zu sichern und schwenkbar zur Lagerbockeinheit zu lagern. In einer ersten bevorzugten Ausführungsform sind die Lagerbereiche der Lagerbockeinheit und der Kupplungseinheit als zylindrische Bohrungen ausgeführt, durch welche ein Befestigungselement hindurch führbar ist, um die Lagerbockeinheit und die Kupplungseinheit gegen Verlagerung quer zur Schwenkachse zu sichern und gleichzeitig eine Verschwenkung um die Schwenkachse zu erlauben. Weiterhin kann es bevorzugt sein, dass zusätzlich zu diesen als zylindrische Bohrungen ausgeführten Flächen des Lagerbereiches weitere zylindrische oder Teilflächen einer Zylindermantelfläche vorgesehen sind, welche insbesondere bevorzugt hohe quer zur Schwenkachse auftretende Kräfte übertragen können. Solche besonders hohen Kräfte sind insbesondere die Gewichtskraft des Sattelaufliegers sowie die von der Zugmaschine auf den Sattelauflieger übertragenen Zug- und Bremskräfte.

Vorzugsweise weist die Lagerbockeinheit zwei Lagerböcke auf, welche längs der Schwenkachse beabstandet zueinander am Rahmen festlegbar sind, wobei jeweils ein Lagerbereich an einem Lagerbock vorgesehen ist und wobei zumindest ein Lagerbock einen ersten Anschlag und/oder einen zweiten Anschlag aufweist. Besonders bevorzugt ist es hierbei, dass die beiden Lagerböcke identisch ausgebildet sind und eine schwenkbare Lagerung der Kupplungseinheit relativ zum Rahmen des Nutzfahrzeuges über zwei Lagerbereiche der Kupplungseinheit gewährleisten. Weiterhin bevorzugt ist es, dass sowohl der erste als auch der zweite Lagerbock einen ersten und/oder einen zweiten Anschlag aufweisen. Auf diese Weise kann insbesondere eine Verwindung der Kupplungseinheit minimiert werden, wie sie auftreten würde, wenn die Kupplungseinheit bei Erreichen des jeweiligen Anschlagwinkels nur an einem Lagerbock anschlagen würde.

Vorzugsweise sind der erste Anschlag und/oder bevorzugt der zweite Anschlag einstückig mit der Lagerbockeinheit ausgeführt. Insbesondere bevorzugt ist es hierbei, dass die Lagerböcke als Gussteil ausgeführt ist, wobei der erste und/oder zweite Anschlag einstückig an dem jeweiligen Lagerbock angegossen ist. Es ergeben sich auf diese Weise bei geringem Fertigungsaufwand besonders homogene Materialparameter, wie beispielsweise eine homogene Festigkeit, um die auf den ersten Anschlag wirkenden Kräfte besonders gleichmäßig in die Lagerbockeinheit zu übertragen. Alternativ bevorzugt könnte der erste Anschlag auch als in die Lagerbockeinheit einzuschraubende Schraube oder Bolzen ausgeführt sein, wobei jedoch Einbußen hinsichtlich der Festigkeit des ersten Anschlages hingenommen werden müssten.

Weiterhin bevorzugt weist die Lagerbockeinheit im Bereich des ersten Anschlages eine Materialverstärkung zur Aufnahme hoher Kräfte auf. Als Materialverstärkung wird in diesem Zusammenhang bevorzugt eine bereichsweise gesteigerte Wandstärke sowie besonders bevorzugte gerundete Außengeometrien der entsprechenden Abschnitte der Lagerbockeinheit im Bereich des ersten bzw. bevorzugt auch des zweiten Anschlages bezeichnet. Weiterhin bevorzugt kann es sein, dass der erste und/oder der zweite Anschlag der Kupplungseinheit und/oder der Lagerbockeinheit eine Einstellmöglichkeit zur Voreinstellung eines bestimmten ersten oder zweiten Anschlagwinkels aufweist. Besonders bevorzugt können hierzu keilförmige Elemente verwendet werden, welche die entsprechende Anschlagfläche des ersten und/oder des zweiten Anschlages sowohl an der Kupplungseinheit als auch an der Lagerbockeinheit verschieben, so dass die Kupplungseinheit bei einer größeren oder bei einer kleineren Verschwenkung bereits an den ersten bzw. den zweiten Anschlag anschlägt.

Weitere Vorteile und Merkmale der vorliegenden Erfindung ergeben sich aus der nachfolgenden Beschreibung bevorzugter Ausführungsbeispiele mit Bezug auf die beigefügten Figuren. Es versteht sich, dass Merkmale einzelner Ausführungsformen auch in anderen Ausführungsformen zum Einsatz gelangen können.

Es zeigen:
- Fig.1A, 1B und 1C: schematische Ansichten einer bevorzugten Ausführungsform der erfindungsgemäßen Sattelkupplung,
- Fig.2: eine teilweise geschnittene Ansicht einer bevorzugten Ausführungsform der erfindungsgemäßen Sattelkupplung,
- Fig.3: eine Seitenansicht einer bevorzugten Ausführungsform der erfindungsgemäßen Sattelkupplung und
- Fig.4: eine weitere Ansicht einer bevorzugten Ausführungsform der erfindungsgemäßen Sattelkupplung

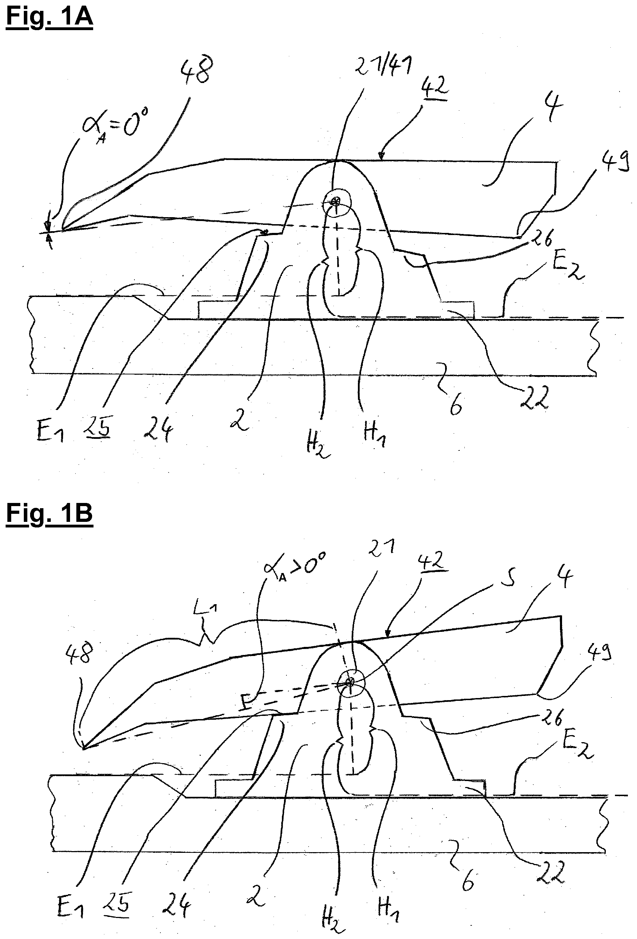

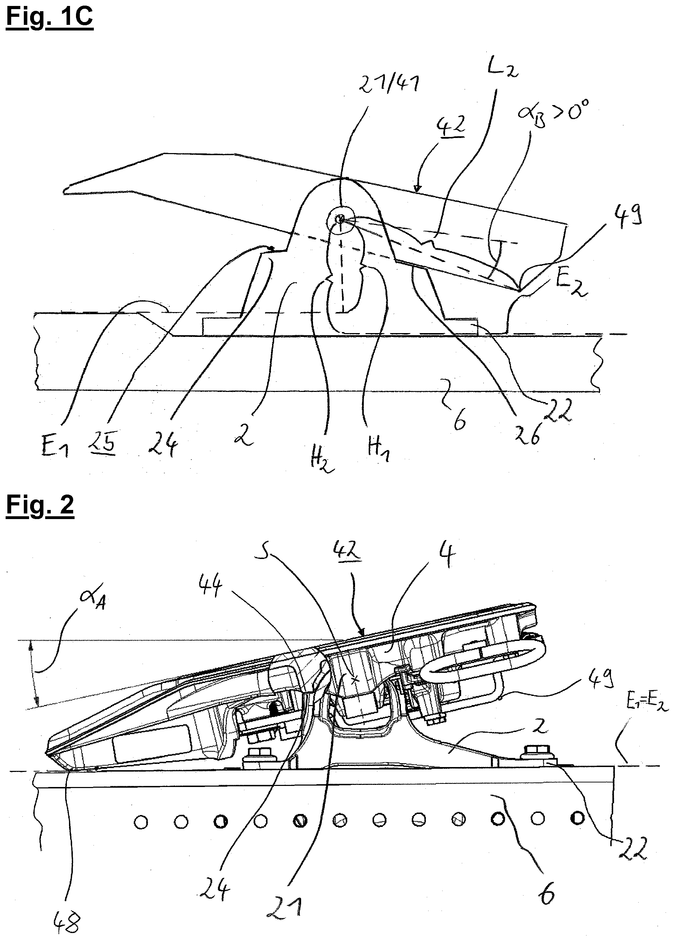

**Fig.1A****,** 1**B und 1C** zeigen drei Ansichten einer bevorzugten Ausführungsform der erfindungsgemäßen Sattelkupplung, wobei Fig.1A die Sattelkupplung in einer Neutralstellung, Fig.1B die Sattelkupplung bei positiver Verschwenkung der Kupplungseinheit 4 und Fig.1C die Sattelkupplung bei negativer Verschwenkung der Kupplungseinheit 4 relativ zum Rahmen 6 des Nutzfahrzeuges zeigt. In jeder der Figuren 1A bis 1C ist ein Rahmen 6 des Nutzfahrzeuges vorgesehen, an welchem eine Lagerbockeinheit 2 über ihren Befestigungsbereich 22 festgelegt ist, wobei die Lagerbockeinheit 2 einen Lagerbereich 21 aufweist, in welchem eine Kupplungseinheit 4 verschwenkbar gelagert ist. Die Schwenkbewegung der Kupplungseinheit 4 relativ zur Lagerbockeinheit 2 vollzieht sich dabei um eine Schwenkachse S. Zur Lagerung der Kupplungseinheit 4 an der Lagerbockeinheit 2 weist die Kupplungseinheit 4 einen Lagerbereich 41 auf, welcher mit dem Lagerbereich 21 der Lagerbockeinheit zumindest Bereichsweise korrespondiert. Die Oberseite des Rahmens 6 definiert vorzugsweise eine erste Rahmenebene E₁, welche dadurch gekennzeichnet ist, dass die Kupplungseinheit 4 den Rahmen 6 auf Höhe dieser ersten Rahmenebene E₁ bei positiver Verschwenkung und für den Fall, dass kein erster Anschlag 24 vorgesehen ist, als erstes berühren würde. Die zweite Rahmenebene E₂ ist analog hierzu die Ebene, in welcher die Kupplungseinheit 4 den Rahmen 6 bei negativer Verschwenkung und für den Fall, dass kein zweiter Anschlag 26 vorgesehen ist, als erstes berühren würde. Um eine gewisse Mindestverschwenkbarkeit der Kupplungseinheit 4 relativ zum Rahmen 6 zu ermöglichen, ist der Lagerbereich 21 mit der Schwenkachse S um einen ersten Abstand H₁ von der ersten Rahmenebene E₁ und um einen zweiten Abstand H₂ von der zweiten Rahmenebene E₂ beabstandet. Es versteht sich, dass je größer der erste Abstand H₁, bzw. der zweite Abstand H₂ ist, die Kupplungseinheit 4 umso weiter gegenüber dem Rahmen 6 bzw. der Lagerbockeinheit 2 verschwenkt werden kann, ohne dass eines der distalen Enden 48, 49 der Kupplungseinheit 4 mit dem Rahmen 6 in Berührung kommen würde, sofern nicht ein erster Anschlag 24 oder ein zweiter Anschlag 26 vorgesehen wäre.

**Fig. 1A** zeigt die Sattelkupplung in einem Neutralzustand, welcher insbesondere bevorzugt dadurch gekennzeichnet ist, dass die Oberseite 42 der Kupplungseinheit 4 im Wesentlichen horizontal ausgerichtet ist. In dieser Stellung der Kupplungseinheit wird der Verschwenkwinkel a als gleich Null definiert.

**Fig. 1B** zeigt die Sattelkupplung bei einer positiven Verschwenkung der Kupplungseinheit 4, in der Figur eine Verschwenkung gegen den Uhrzeigersinn, wobei der Verschwenkwinkel a größer als Null ist. Fig. 1B zeigt dabei eine Verschwenkung der Kupplungseinheit 4 um einen Winkel α, welcher gleich dem ersten Anschlagwinkel α_{A} ist, wobei die Kupplungseinheit 4 an dem Anschlag 24 anschlägt und ein weiteres Verschwenken der Kupplungseinheit verhindert ist. Besonders bevorzugt ist es, dass in diesem Zustand das erste distale Ende 48 der Kupplungseinheit 4 einen ausreichenden Sicherheitsabstand zur ersten Rahmenebene E₁ aufweist.

**Fig. 1C** zeigt die Sattelkupplung bei einer negativen Verschwenkung der Kupplungseinheit 4 relativ zum Rahmen 6 bzw. zur Lagerbockeinheit 2. Dabei schlägt bei Erreichen eines zweiten Anschlagwinkels α_{B} die Kupplungseinheit 4 an einem zweiten Anschlag 26 an, wobei eine weitere Verschwenkung der Kupplungseinheit 4 in negativer Verschwenkrichtung verhindert ist. Dargestellt ist auch, dass die erste Rahmenebene E₁ im Bereich der in der Figur links dargestellten Hinterseite des Nutzfahrzeuges bzw. des Rahmens 6 höher gelegen sein kann, als im Bereich der in der Figur rechts dargestellten Vorderseite des Rahmens 6. Folglich kann bevorzugt der erste Anschlagwinkel α_{A} kleiner sein als der zweite Anschlagwinkel α_{B} (in der Figur dargestellt). Alternativ bevorzugt könnte auch der erste Anschlagwinkel α_{A} größer sein als der zweite Anschlagwinkel α_{B}.

**Fig. 2** zeigt eine Seitenansicht einer bevorzugten Ausführungsform der erfindungsgemäßen Sattelkupplung, wobei die Lagerbockeinheit 2 bevorzugt besonders kraftflussoptimiert, das heißt mit einer Geometrie, die die Aufnahme und Ableitung von Kräften bei geringen Materialspannungen ermöglicht, ausgelegt ist. Die Kupplungseinheit 4 ist bevorzugt die Sattelkupplungsplatte einer Sattelkupplung, wobei deren nach links gerichtetes, hinteres bzw. erstes distales Ende 48 vorzugsweise als sich verjüngend ausgebildet ist, um auch bei großen Anstellwinkeln der Oberseite 42 der Führungseinheit 4 eine Berührung mit dem Rahmen 6 des Nutzfahrzeuges zu verhindern. In dem in der Figur teilweise geschnittenen Bereich ist der erste Anschlag 24 der Lagebockeinheit 2 erkennbar, wobei der zweite Anschlag 26 in der Figur durch die Kupplungseinheit 4 verdeckt ist.

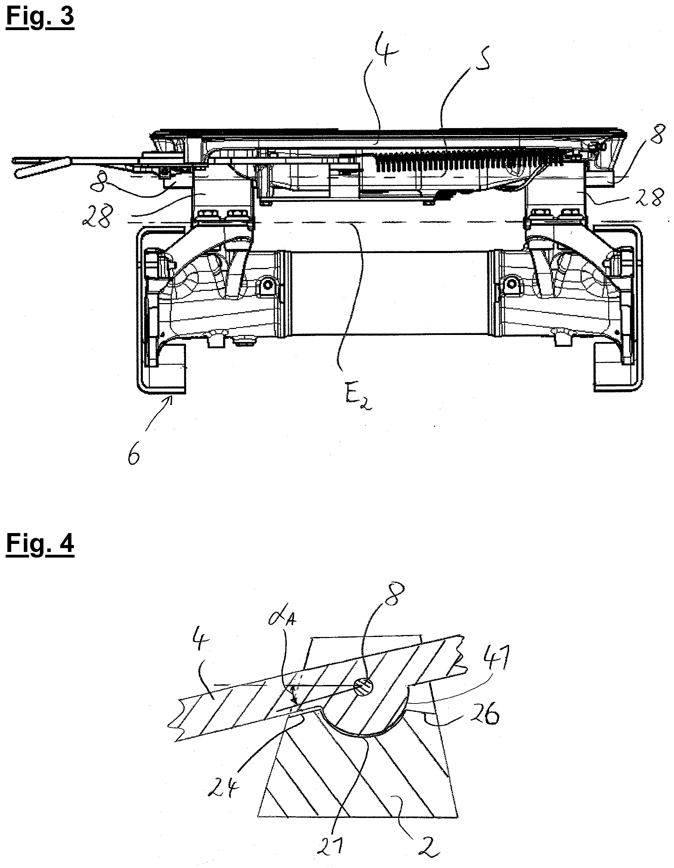

**Fig. 3** zeigt eine Ansicht der auch in Fig. 2 gezeigten, bevorzugten Ausführungsform der erfindungsgemäßen Sattelkupplung. Die Lagerbockeinheit 2 ist dabei bevorzugt aus zwei Lagerböcken 28 gebildet, welche jeweils über Schraub- oder Bolzenverbindungen am Rahmen 6 des Nutzfahrzeugs festgelegt sind. Bevorzugt sind die Lagerbereiche 21 (nicht gezeigt) beider Lagerböcke 28 dabei konzentrisch, bzw. koaxial zur Schwenkachse S ausgebildet. Bevorzugt ist je zumindest ein Befestigungselement 8 vorgesehen, um die Kupplungseinheit 4 an den beiden Lagerböcken 28 schwenkbar festzulegen.

**Fig.4** zeigt eine Schnittansicht einer bevorzugten Ausführungsform der erfindungsgemäßen Sattelkupplung, wobei insbesondere der Lagerbereich 21 der Lagerbockeinheit 2 dargestellt ist. Die Lagerfläche des Lagerbereiches 21 ist dabei besonders bevorzugt als Teilfläche der Mantelfläche eines Zylinders ausgebildet. Weiterhin ist gezeigt, dass ein Befestigungselement 8 vorgesehen ist, um die Kupplungseinheit 4 an der Lagerbockeinheit 2 festzulegen. Die Lagerbockeinheit 2 weist vorzugsweise einen ersten Anschlag 24 und einen zweiten Anschlag 26 auf, welche in der gezeigten, bevorzugten Ausführungsform besonders nah bzw. angrenzend an den Lagerbereich 21 ausgebildet sind.

**Bezugszeichen:**

| | |
|---|---|
| 2 - Lagerbockeinheit | 48 - erstes distales Ende |
| 4 - Kupplungseinheit | 49 - zweites distales Ende |
| 6 - Rahmen | α - Winkel |
| 8 - Befestigungselement | α_{A} - erster Anschlagwinkel |
| 21 - Lagerbereich | α_{B} - zweiter Anschlagwinkel |
| 22 - Befestigungsbereich | E₁ - erste Rahmenebene |
| 24 - erster Anschlag | E₂ - zweite Rahmenebene |
| 25 - Anschlagfläche | H₁ - erster Abstand |
| 26 - zweiter Anschlag | H₂ - zweiter Abstand |
| 28 - Lagerbock | L₁ - erste Entfernung |
| 41 - Lagerbereich | L₂ - zweite Entfernung |
| 42 - Oberseite | S - Schwenkachse |
| 44 - Anschlag | |

## Patentansprüche

1. Sattelkupplung eines Nutzfahrzeuges, umfassend eine Lagerbockeinheit (2) und eine Kupplungseinheit (4),
wobei die Lagerbockeinheit (2) einen Befestigungsbereich (22) zu Festlegung an einem Rahmen (6) des Nutzfahrzeuges und einen Lagerbereich (21) aufweist,
wobei die Kupplungseinheit (4) schwenkbar zur Lagerbockeinheit (2) am Lagerbereich (21) der Lagerbockeinheit (2) festlegbar ist,
wobei die Lagerbockeinheit (2) und/oder die Kupplungseinheit (4) einen ersten Anschlag (24, 44) aufweist, welcher die Schwenkbewegung der Kupplungseinheit (4) relativ zur Lagerbockeinheit (2) begrenzt, und
wobei der mittlere Abstand des ersten Anschlags von der Schwenkachse (S) ein 0,15- bis 0,2-faches des Abstandes (L₁) eines ersten distalen Endes (48) der Kupplungseinheit (4) von der Schwenkachse (S) ist.

2. Sattelkupplung nach Anspruch 1,
wobei der erste Anschlag (24) der Lagerbockeinheit (2) als Vorsprung ausgebildet ist und eine Anschlagfläche (25) aufweist, und
wobei die Kupplungseinheit (4) eine Anschlagfläche (45) aufweist, welche mit der Anschlagfläche (25) der Lagerbockeinheit (2) korrespondiert.

3. Sattelkupplung nach Anspruch 2,
wobei sich die Anschlagfläche (25) im Wesentlichen parallel zur einer Ebene erstreckt, welche um den ersten Anschlagwinkel (α_{A}) relativ zur ersten Rahmenebene (E₁) verschwenkt und senkrecht zu einer um die Schwenkachse (S) verlaufenden Kreisbahn ausgerichtet ist.

4. Sattelkupplung nach einem der vorhergehenden Ansprüche,
wobei die Kupplungseinheit (4) einen Anschlag (44) aufweist, welcher als Vorsprung ausgebildet ist und ausgelegt ist sich an einer Anschlagfläche (25) der Lagerbockeinheit (2) abzustützen.

5. Sattelkupplung nach einem der vorhergehenden Ansprüche,
wobei die Lagerbockeinheit (2) einen zweiten Anschlag (26) aufweist, an welchem die Kupplungseinheit (4) bei einer negativen Verschwenkung um einen zweiten Anschlagwinkel (α_{B}) anschlägt.

6. Sattelkupplung nach einem der vorhergehenden Ansprüche,
wobei die Lagerbockeinheit (2) zwei Lagerböcke (28) aufweist, welche längs der Schwenkachse (S) beabstandet zueinander am Rahmen (2) festlegbar sind,
wobei an den Lagerböcken (28) jeweils ein Lagerbereich (21) vorgesehen ist, und
wobei zumindest einer der Lagerböcke (28) den ersten Anschlag (24) und/oder einen zweiten Anschlag (26) aufweist.

7. Sattelkupplung nach einem der vorhergehenden Ansprüche,
wobei der erste Anschlag (24) einstückig mit der Lagerbockeinheit (2) ausgeführt ist.

8. Sattelkupplung nach einem der Ansprüche 5 bis 7,
wobei der erste Anschlag (24) und/oder der zweite Anschlag (26) ein Material höherer Festigkeit aufweisen, und
wobei das Material höherer Festigkeit bevorzugt als separates Verschleißteil an der Anschlagfläche (25) des ersten und/oder des zweiten Anschlages (24, 26) anordenbar ist.

9. Fahrzeugsystem umfassend einen Rahmen (6) und eine an diesem festgelegte Sattelkupplung nach einem der vorhergehenden Ansprüche,
wobei der Lagerbereich (21) der Lagerbockeinheit (2) von einer durch den Rahmen (6) definierten ersten Rahmenebene (E₁) beabstandet ist,
wobei eine durch den Lagerbereich (21) verlaufende Schwenkachse (S) um einen ersten Abstand (H₁) von der ersten Rahmenebene (E₁) beabstandet ist,
wobei der erste Abstand (H₁) gleich dem Produkt aus dem Sinus eines Maximalwinkels (αₘₐₓ) und einer ersten Entfernung (L₁) eines ersten distalen Endes (49) der Kupplungseinheit (4) von der Schwenkachse ist, wobei der Maximalwinkel (αₘₐₓ) der Kupplungseinheit (4), von einer Parallelen zur ersten Rahmenebene (E₁) gemessen, in einem Bereich von 3°-30°, bevorzugt 4°-20° und besonders bevorzugt im Bereich von ca. 4°-12° liegt.

10. Fahrzeugsystem nach Anspruch 9,
wobei die Kupplungseinheit (4) bei positiver Verschwenkung um einen ersten Anschlagwinkel (α_{A}) am ersten Anschlag (24) anschlägt,
wobei der erste Anschlagwinkel (α_{A}) ein 0,3 - 1-faches, bevorzugt ein 0,5 - 0,95-faches und besonders bevorzugt ein ca. 0,7 - 0,9-faches des Maximalwinkels (αₘₐₓ) ist.

11. Fahrzeugsystem nach Anspruch 10 mit einer Sattelkupplung nach Anspruch 5,
wobei der zweite Anschlagwinkel (α_{B}) ein 0,3 - 1-faches, bevorzugt ein 0,5 - 0,95-faches und besonders bevorzugt ein ca. 0,7 - 0,9-faches des Arkussinus des Quotienten aus einem zweiten Abstand (H₂) der Schwenkachse (S) von einer zweiten Rahmenebene (E₂) und einer zweiten Entfernung (L₂) eines zweiten distalen Endes (49) der Kupplungseinheit (4) von der Schwenkachse (S) ist.

## Claims

1. Fifth-wheel coupling of a commercial vehicle, comprising a bearing block unit (2) and a coupling unit (4),
wherein the bearing block unit (2) has a fastening region (22) for securing to a frame (6) of the commercial vehicle, and a bearing region (21), wherein the coupling unit (4) can be secured to the bearing region (21) of the bearing block unit (2) so as to be pivotable with respect to the bearing block unit (2),
wherein the bearing block unit (2) and/or the coupling unit (4) have/has a first stop (24, 44) which limits the pivoting movement of the coupling unit (4) relative to the bearing block unit (2), and wherein the average spacing of the first stop from the pivot axis (S) is 0.15 to 0.2 times the spacing (L₁) of a first distal end (48) of the coupling unit (4) from the pivot axis (S).

2. Fifth-wheel coupling according to claim 1,
wherein the first stop (24) of the bearing block unit (2) takes the form of a projection and has a stop surface (25), and
wherein the coupling unit (4) has a stop surface (45) which corresponds to the stop surface (25) of the bearing block unit (2).

3. Fifth-wheel coupling according to Claim 2,
wherein the stop surface (25) extends substantially parallel to a plane which is pivoted through the first stop angle (α_{A}) relative to the first frame plane (E₁) and oriented perpendicularly to a circular path extending around the pivot axis (S).

4. Fifth-wheel coupling according to one of the preceding claims,
wherein the coupling unit (4) has a stop (44) which takes the form of a projection and is designed to be supported on a stop surface (25) of the bearing block unit (2).

5. Fifth-wheel coupling according to one of the preceding claims,
wherein the bearing block unit (2) has a second stop (26) against which the coupling unit (4) butts with a negative pivoting movement through a second stop angle (α_{B}).

6. Fifth-wheel coupling according to one of the preceding claims,
wherein the bearing block unit (2) has two bearing blocks (28) which can be secured to the frame (2) while being spaced apart from one another along the pivot axis (S),
wherein a bearing region (21) is provided on each of the bearing blocks (28), and
wherein at least one of the bearing blocks (28) has the first stop (24) and/or a second stop (26).

7. Fifth-wheel coupling according to one of the preceding claims,
wherein the first stop (24) is formed in one piece with the bearing block unit (2).

8. Fifth-wheel coupling according to either of Claims 5 to 7,
wherein the first stop (24) and/or the second stop (26) have/has a material of higher strength, and wherein the material of higher strength can preferably be arranged as a separate wear part on the stop surface (25) of the first and/or the second stop (24, 26).

9. Vehicle system comprising a frame (6) and a fifth-wheel coupling according to one of the preceding claims that is secured thereto,
wherein the bearing region (21) of the bearing block unit (2) is spaced from a first frame plane (E₁) defined by the frame (6),
wherein a pivot axis (S) extending through the bearing region (21) is spaced by a first spacing (H₁) from the first frame plane (E₁),
wherein the first spacing (H₁) is equal to the product of the sine of a maximum angle (αₘₐₓ) and a first distance (L₁) of a first distal end (49) of the coupling unit (4) from the pivot axis, wherein the maximum angle (αₘₐₓ) of the coupling unit (4), measured from a parallel to the first frame plane (E₁), lies in a range of 3°-30°, preferably 4°-20° and particularly preferably in the range of approximately 4°-12°.

10. Vehicle system according to Claim 9,
wherein the coupling unit (4) butts against the first stop (24) with a positive pivoting movement through a first stop angle (α_{A}),
wherein the first stop angle (α_{A}) is 0.3 - 1 times, preferably 0.5 - 0.95 times, and particularly preferably about 0.7 - 0.9 times, the maximum angle (αₘₐₓ).

11. Vehicle system according to Claim 10 having a fifth-wheel coupling according to Claim 5,
wherein the second stop angle (α_{B}) is 0.3 - 1 times, preferably 0.5 - 0.95 times, and particularly preferably about 0.7 - 0.9 times, the arcsine of the quotient of a second spacing (H₂) of the pivot axis (S) from a second frame plane (E₂) and a second distance (L₂) of a second distal end (49) of the coupling unit (4) from the pivot axis (S).

## Revendications

1. Sellette d'attelage d'un véhicule utilitaire, comprenant une unité de bloc support (2) et une unité d'attelage (4),
dans laquelle
l'unité de bloc support (2) présente une zone de fixation (22) pour l'immobilisation sur un châssis (6) du véhicule utilitaire et une zone de support (21),
l'unité d'attelage (4) peut être immobilisée de manière mobile en pivotement par rapport à l'unité de bloc support (2) dans la zone de support (21) de l'unité de bloc support (2),
l'unité de bloc support (2) et/ou l'unité d'attelage (4) comprend une première butée (24, 44) qui limite le mouvement de pivotement de l'unité d'attelage (4) par rapport à l'unité de bloc support (2), et
la distance moyenne de la première butée par rapport à l'axe de pivotement (S) est 0,15 à 0,2 fois la distance (L₁) d'une première extrémité distale (48) de l'unité d'attelage (4) par rapport à l'axe de pivotement (S).

2. Sellette d'attelage selon la revendication1,
dans laquelle
la première butée (24) de l'unité de bloc support (2) est réalisée sous forme de saillie et présente une surface de butée (25), et
l'unité d'attelage (4) présente une surface de butée (45) qui correspond à la surface de butée (25) de l'unité de bloc support (2).

3. Sellette d'attelage selon la revendication 2,
dans laquelle
la surface de butée (25) est sensiblement parallèle à un plan qui est pivoté d'un premier angle de butée (α_{A}) par rapport au premier plan de châssis (E₁) et qui est orienté perpendiculairement à une trajectoire circulaire s'étendant autour de l'axe de pivotement (S).

4. Sellette d'attelage selon l'une des revendications précédentes,
dans laquelle
l'unité d'attelage (4) présente une butée (44) qui est réalisée sous forme de saillie et qui est conçue pour s'appuyer contre une surface de butée (25) de l'unité de bloc support (2).

5. Sellette d'attelage selon l'une des revendications précédentes,
dans laquelle
l'unité de bloc support (2) présente une seconde butée (26) contre laquelle vient buter l'unité d'attelage (4) lors d'un pivotement négatif d'un second angle de butée (α_{B}).

6. Sellette d'attelage selon l'une des revendications précédentes,
dans laquelle
l'unité de bloc support (2) comprend deux blocs supports (28) qui sont susceptibles d'être immobilisés sur le châssis (2) en étant espacés l'un de l'autre le long de l'axe de pivotement (S),
sur les blocs supports (28) est prévue une zone de support (21) respective, et
l'un au moins des blocs supports (28) présente la première butée (24) et/ou une seconde butée (26).

7. Sellette d'attelage selon l'une des revendications précédentes,
dans laquelle
la première butée (24) est réalisée d'un seul tenant avec l'unité de bloc support (2).

8. Sellette d'attelage selon l'une des revendications 5 à 7,
dans laquelle
la première butée (24) et/ou la seconde butée (26) présente(nt) un matériau de plus haute résistance, et
le matériau de plus haute résistance est susceptible d'être disposé de préférence sous forme de pièce d'usure séparée sur la surface de butée (25) de la première et/ou de la seconde butée (24, 26).

9. Système de véhicule comportant un châssis (6) et une sellette d'attelage, immobilisée sur celui-ci, selon l'une des revendications précédentes,
dans lequel
la zone de support (21) de l'unité de bloc support (2) est espacée d'un premier plan de châssis (E₁) défini par le châssis (6),
un axe de pivotement (S) passant par la zone de support (21) est espacé d'une première distance (H₁) par rapport au premier plan de châssis (E₁),
la première distance (H₁) est égale au produit du sinus d'un angle maximal (αₘₐₓ) et d'une première distance (L₁) d'une première extrémité distale (49) de l'unité d'attelage (4) par rapport à l'axe de pivotement,
l'angle maximal (αₘₐₓ) de l'unité d'attelage (4), mesuré depuis une parallèle au premier plan de châssis (E₁), est dans une plage de 3° à 30°, de préférence de 4° à 20° et de manière particulièrement préférée dans la plage d'environ 4° à 12°.

10. Système de véhicule selon la revendication 9,
dans lequel
l'unité d'attelage (4) vient buter contre la première butée (24) lors d'un pivotement positif d'un premier angle de butée (α_{A}),
le premier angle de butée (α_{A}) est 0,3 à 1 fois, de préférence 0,5 à 0,95 fois et de manière particulièrement préférée environ 0,7 à 0,9 fois l'angle maximal (αₘₐₓ).

11. Système de véhicule selon la revendication 10 comportant une sellette d'attelage selon la revendication 5,
dans lequel
le second angle de butée (α_{B}) est 0,3 à 1 fois, de préférence 0,5 à 0,95 fois et de manière particulièrement préférée environ 0,7 à 0,9 fois l'arc sinus du quotient de la seconde distance (H₂) de l'axe de pivotement (S) par rapport à un second plan de châssis (E₂) et d'une seconde distance (L₂) d'une seconde extrémité distale (49) de l'unité d'attelage (4) par rapport à l'axe de pivotement (S).
